Europäisches Patentamt

European Patent Office

Office européen des brevets

(11) Veröffentlichungsnummer: **0 462 297 A1**

## (12) EUROPÄISCHE PATENTANMELDUNG

(21) Anmeldenummer: 90111435.5

(22) Anmeldetag: 18.06.90

(51) Int. Cl.⁵: **G01G 11/00, G01G 19/14**

(43) Veröffentlichungstag der Anmeldung:
27.12.91 Patentblatt 91/52

(84) Benannte Vertragsstaaten:
AT BE CH DE DK ES FR GB GR IT LI LU NL SE

(71) Anmelder: **AUTE AG**
**10 Rue St. Honoré**
**CH-2000 Neuchâtel(CH)**

(72) Erfinder: **Lotz, Horst K.**
**Fasanenweg 7**
**W-6240 Königstein(DE)**

(74) Vertreter: **Blumbach Weser Bergen Kramer**
**Zwirner Hoffmann Patentanwälte**
**Sonnenberger Strasse 100**
**W-6200 Wiesbaden 1(DE)**

(54) **Wiegevorrichtung für Stahlstrang-Giessanlagen.**

(57) Bei einer Wiegevorrichtung für Stahlstrang-Gießanlagen zur Ermittlung eines genauen Strangteilstückgewichts an der Transporteinrichtung, beispielsweise einem Rollgang (3), erfaßt ein über dem
Rollgang angeordnetes Hubgerät (6) bei Betätigung
das Strangteilstück mit Hilfe eines Hubrahmens (4),
wobei am Hubgerät eine Wiegeeinrichtung vorgesehen ist. Diese besteht vorzugsweise aus einer Zugwaage (5), die zwischen dem Hubrahmen und dem
Hubgerät angeordnet ist.

Fig.1

EP 0 462 297 A1

Die Erfindung betrifft eine Wiegevorrichtung für Stahlstrang-Gießanlagen zur Ermittlung eines genauen Strangteilstückgewichts an der Transporteinrichtung, beispielsweise einem Rollgang.

Zur Leistungs- und Wertfeststellung für Transport und Weiterverarbeitung ist das genaue Wiegen, insbesondere auch von Produkten aus Stahl- und Walzwerken, von Bedeutung, so z. B. bei der Festsetzung von Legierungszusätzen. Besondere Schwierigkeiten bereiten jedoch genaue Wägungen an Stahlstrang-Gießanlagen von relativ schweren, vielleicht noch heißen Halbfabrikaten, wie Brammen, Blöcken, Knüppeln, ohne zu großen Transportverlauf, z. B. auf Rollgängen. Hier spielt das Wiegen nach dem Unterteilen eine besonders wichtige Rolle, um die Anlagenleistung an dieser Betriebsschnittstelle vor der Abgabe in andere, weiterverarbeitende Betriebe genau zu bestimmen. Bei diesen schweren Werkstücken mit hohen Stückzahlen verursachen kleine Fehler aufsummiert hohe Kosten oder beeinflussen den Verkaufspreis in gravierende Weise. Auch im Hinblick auf die Einsatzplanung ist eine genaue Gewichtsermittlung wichtig.

Es ist bekannt, hinter Stahlstrang-Gießanlagen, beispielsweise in Ablaufrollgängen, vereinzelt oder zusammengefaßt Rollgangswagen vorzusehen. Dabei werden Rollgangsabschnitte auf Druckmeßelementen installiert; wegen der auftretenden Schwierigkeiten wird oftmals auf ein Wiegen in diesem Bereich ganz verzichtet und dieses später bei anderen Weiterverarbeitungsvorgängen an geeigneter Stelle oder beim Versand nachgeholt. Dabei ist von Nachteil, daß dann der zeitliche und örtliche Versatz bei der Zuordnung, Auswertung und Nutzung Probleme verursacht.

Diesen Rollgangswagen haftet der Nachteil an, daß ohne besondere, teure und umständliche Einrichtungen mehrere Meßelemente Meßwerte zur Summierung mit ihren Eigenfehlern liefern, die sie beliebig addieren und subtrahieren, so daß starke Verfälschungen auftreten. Auch das Mitwiegen der schweren Transporteinrichtungteile mit wiederum unerwünschten eigenen Einflüssen auf das Schlußergebnis ist nicht zu vermeiden. Außerdem sind diese Einrichtungen teuer und bedürfen zum Teil geeigneter Führungs- und Schutzeinrichtungen gegen Wärme, Schmutz und stoßartige Belastungen.

Der Erfindung liegt daher die Aufgabe zugrunde, eine Wiegevorrichtung für Stahlstrang-Gießanlagen verfügbar zu machen, die sehr genau arbeitet, in konstruktiv wenig aufwendiger Weise keine Schutzmaßnahmen verlangt und weitgehend wartungsfrei bei langer Lebensdauer ist.

Die Lösung dieser Aufgabe besteht darin, daß bei einer Wiegevorrichtung der eingangs genannten Art ein über dem Rollgang angeordnetes Hubgerät bei Betätigung das Strangteilstück mit Hilfe eines Hubrahmens erfaßt und daß am Hubgerät eine Wiegeeinrichtung vorgesehen ist.

So sieht die Erfindung vor, daß das Hubgerät unmittelbar hinter der Brennschneidstation angeordnet ist und daß die Wiegeeinrichtung mit einem Meßelement auskommt.

Auf diese Weise sind Verfälschungen weitgehend ausgeschlossen und unnötig hohe Eigengewichte vermieden, und das Wiegen wird ohne die Messung beeinflussende Führungen oder Lager vorgenommen.

Gemäß einer vorteilhaften Ausführungsform besteht die Wiegeeinrichtung aus einer Zugwaage, die zwischen dem Hubrahmen und dem Hubgerät angeordnet ist. Dabei ist die Zugwaage zweckmäßig mit elektronischen Meßwertgebern und Rechnern zum genauen Feststellen, Ermitteln und Weitergeben der Strangteilstücklast ausgerüstet.

Eine vorteilhafte Ausführungsform der Wiegevorrichtung besteht darin, daß der Hubrahmen mit mindestens zwei Querholmen ausgestattet ist, die in die Lücken des Rollgangs unter das ein- oder durchlaufende Strangteilstück eintauchen, wobei mit Vorteil das Strangteilstück zum Wiegen mit seinem Schwerpunkt etwa in der Mitte des Hubrahmens zu liegen kommt.

Gemäß einer Weiterbildung schlägt die Erfindung vor, daß die Querholme des Hubrahmens selbst als Teile des Transportsystems, z. B. als feststellbare bzw. angetriebene Rollen, ausgebildet sind.

Eine vorteilhafte Ausführungsform der Erfindung besteht darin, daß das Hubgerät an einer Hubbrücke angeordnet ist, die verfahrbar ist, so daß der Hubrahmen über Lücken einer Auflage für Strangteilstücke verfahrbar ist, die mittels Kran oder ähnlicher Einrichtungen mit zu teilenden oder geteilten Strangteilstücken be- oder entladen werden.

Für parallel transportierte oder liegende Strangteilstücke können mehrere Hubgeräte an einer Hubbrücke mit Wiegeeinrichtungen vorgesehen sein.

Eine Fortbildung der Erfindung besteht darin, daß in einer Hubbrücke einseitig ein mit Hubgerät und Zugwaage ausgestatteter Hubrahmen, z. B. mittels eines Hubgerätewagens, zum aufeinanderfolgenden, genauen Wiegen von parallel transportierten oder liegenden Strangteilstücken angeordnet ist.

Eine andere Fortbildung zeichnet sich dadurch aus, daß in einer längs ausgedehnten Hubbrücke ein Hubrahmen, z. B. mittels eines Hubgerätewagens zum aufeinanderfolgenden Wiegen von hintereinander transportierten oder liegenden Strangteilstücken längsverfahrbar angeordnet ist.

Eine zweckmäßige Ausbildung hat sich darin erwiesen, daß der Hubrahmen seitlich gabelartig ausgebildet ist und seitlich in die Transportlücken unter die Strangteilstücke vor dem Wiegen einfahrbar ist.

Die Erfindung soll nachstehend anhand eines Ausführungsbeispiels unter Bezugnahme auf die beigefügten Zeichnungen näher erläutert werden. In den Zeichnungen zeigen:

Fig. 1     eine Seitenansicht einer erfindungsgemäßen Wiegevorrichtung für Stahlstrang-Gießanlagen und

Fig. 2     eine Teilansicht in Gießrichtung der Wiegevorrichtung nach Fig. 1.

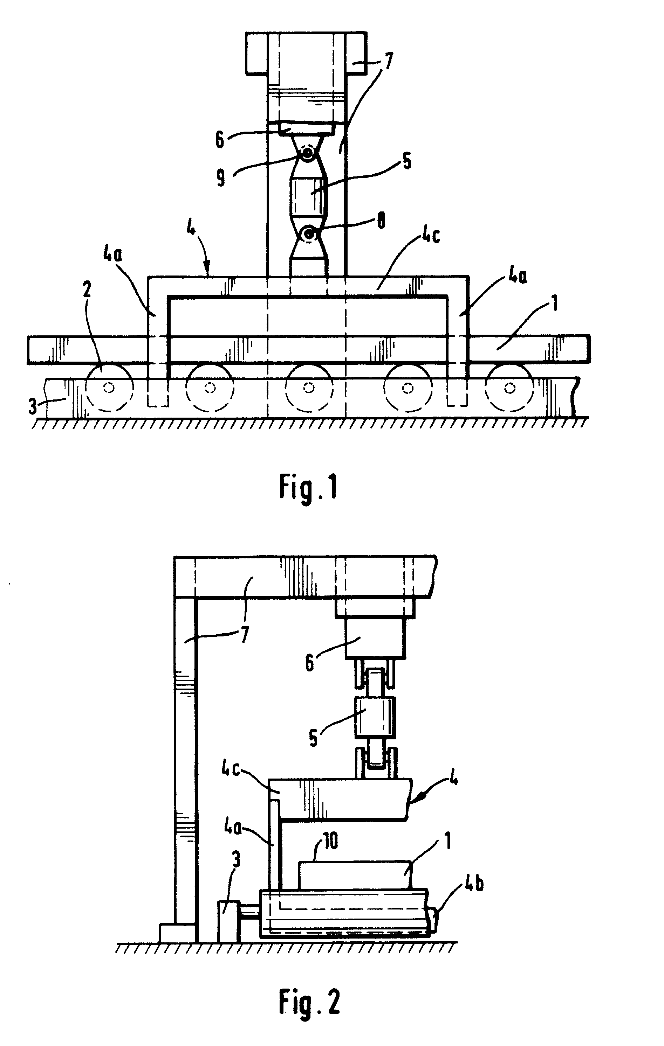

In Fig. 1 ist ein Strangteilstück 1 auf den Rollen 2 eines Rollgangs 3 im Bereich eines möglichen Stillstandes nach dem Abtrennen von dem Gießstrang dargestellt. Der Hubrahmen 4 besitzt Querholme 4a, die sich zwischen den Rollen 2 des Rollgangs 3 in entsprechende Lücken absenken und deren gabelartige Enden 4b unter dem Strangteilstück 1 zu liegen kommen. Die ein-, aus- oder durchlaufenden Strangteilstücke 1 laufen somit durch den Hubrahmen 4, ohne die tieferen Querholme 3a und die gabelartigen Enden 4b sowie andere Träger des Hubrahmens 4 zu berühren.

An dem Querträger 4c des Hubrahmens 4 ist eine Zugwaage 5 über das Gelenk 8 aufgehängt, und die Zugwaage 5 ist ihrerseits über ein Gelenk 9 mit dem Hubgerät 6 verbunden. Dieses Hubgerät 6 ist an einer einfachen Hubbrücke 7 angebracht. Durch die vertikalen Gewichtskräfte der vereinigten symmetrischen Bauteile wird der Hubrahmen 4 ohne besondere Führungen immer genau in die Lücken zwischen den Rollen 2 des Rollganges 3 niedergelassen. Die Anordnung des Systems über dem Rollgang 3 und ohne Verbindung mit diesem verhindert nachteilige Einflüsse durch Schmutz, Stöße oder Vibrationen. Da eine schnelle Wägung nur im geringen Abstand über der Oberkante 10 der Rollen 2 des Rollgangs 3 vorgesehen ist, kommt es auch nicht zu Störungen an- oder ablaufender Strangteilstücke 1. Die Hubbrücke 7 kann vibrationsgedämpft aufgestellt und das Meßelement in der Zugwaage 5 mit leichtem Isolierwerkstoff sicher gegen die vom Strangteilstück 1 aufsteigende Wärme geschützt werden, ebenso das Hubgerät 6.

Nur das konstante Gewicht des relativ leichten, hängenden Hubrahmens 4 kann das Wiegeergebnis beeinflussen. Unregelmäßige Teilstücklängen können durch geschickte Anordnung von zwei oder vier Querholmen 4c an entsprechenden Zugwangen des Hubrahmens 4 berücksichtigt werden. Mehr oder weniger ungenaue Lagen des Strangteilstückes 1 haben am Hubrahmen 4 keine Wirkung, wenn nicht zu große, einseitige Überstände zum Aufliegen auf dem Rollgang 1 beim Wiegen oder zum Rutschen des Rahmens 4 führen.

Auf diese Weise wird eine Wiegevorrichtung unmittelbar hinter der Brennschneidstation verfügbar gemacht, die mit einem Meßelement auskommt und unnötig hohe Eigengewichte vermeidet. Mit nur einem Meßelement, einem kleinen zusätzlichen Gewicht über das zu wiegende Stahlstrangstück hinaus bei der Vermeidung einer Geräteführung, wird das Wiegeergebnis somit in optimaler Weise gewonnen.

**Patentansprüche**

1. Wiegevorrichtung für Stahlstrang-Gießanlagen zur Ermittlung eines genauen Strangteilstückgewichts an der Transporteinrichtung, beispielsweise einem Rollgang, dadurch gekennzeichnet,
daß ein über dem Rollgang (3) angeordnetes Hubgerät (6) bei Betätigung das Strangteilstück (1) mit Hilfe eines Hubrahmens (4) erfaßt und daß am Hubgerät (3) eine Wiegeeinrichtung (5) vorgesehen ist.

2. Wiegevorrichtung nach Anspruch 1, dadurch gekennzeichnet, daß das Hubgerät (6) unmittelbar hinter der Brennschneidstation angeordnet ist und daß die Wiegeeinrichtung (5) mit einem Meßelement auskommt.

3. Wiegevorrichtung nach Anspruch 1, dadurch gekennzeichnet, daß die Wiegeeinrichtung (5) aus einer Zugwaage besteht, die zwischen dem Hubrahmen (4) und dem Hubgerät (6) angeordnet ist.

4. Wiegevorrichtung nach Anspruch 3, dadurch gekennzeichnet, daß die Zugwaage (5) mit elektronischen Meßwertgebern und Rechnern zum genauen Feststellen, Ermitteln und Weitergeben der Strangteilstücklast ausgerüstet ist.

5. Wiegevorrichtung nach einem der Ansprüche 1 bis 4, dadurch gekennzeichnet, daß der Hubrahmen (4) mit mindestens zwei Querholmen (4a) ausgestattet ist, die in die Lücken des Rollgangs (3) unter das ein- oder durchlaufende Strangteilstück (1) eintauchen.

6. Wiegevorrichtung nach einem der Ansprüche 1 bis 5, dadurch gekennzeichnet, daß das Strangteilstück (1) zum Wiegen mit seinem Schwerpunkt etwa in der Mitte des Hubrahmens (4) zu liegen kommt.

7. Wiegevorrichtung nach Anspruch 5 oder 6, dadurch gekennzeichnet, daß die Querholme (4a) des Hubrahmens (4) selbst als Teile des Transportsystems (3), z. B. als feststellbare bzw. angetriebene Rollen, ausgebildet sind.

8. Wiegevorrichtung nach einem der Ansprüche 1 bis 7, dadurch gekennzeichnet, daß das Hubgerät (6) an einer Hubbrücke (7) angeordnet ist, die verfahrbar ist, so daß der Hubrahmen (4) über Lücken einer Auflage (3) für Strangteilstücke (1) verfahrbar ist, die mittels Kran oder ähnlicher Einrichtungen mit zu teilenden oder geteilten Strangteilstücken (1) be- oder entladen werden.

9. Wiegevorrichtung nach einem der Ansprüche 1 bis 8, dadurch gekennzeichnet, daß mehrere Hubgeräte (6) an einer Hubbrücke (4) mit Wiegeeinrichtungen (5) für parallel transportierte oder liegende Strangteilstücke (1) vorgesehen sein.

10. Wiegevorrichtung nach einem der Ansprüche 1 bis 9, dadurch gekennzeichnet, daß in einer Hubbrücke (4) einseitig ein mit Hubgerät (6) und Zugwaage (5) ausgestatteter Hubrahmen (4), z. B. mittels eines Hubgerätewagens, zum aufeinanderfolgenden, genauen Wiegen von parallel transportierten oder liegenden Strangteilstücken (1) angeordnet ist.

11. Wiegevorrichtung nach einem der Ansprüche 1 bis 10, dadurch gekennzeichnet, daß in einer längs ausgedehnten Hubbrücke (7) ein Hubrahmen (4), z. B. mittels eines Hubgerätewagens zum aufeinanderfolgenden Wiegen von hintereinander transportierten oder liegenden Strangteilstücken (1) längsverfahrbar angeordnet ist.

12. Wiegevorrichtung nach einem der Ansprüche 1 bis 10, dadurch gekennzeichnet, daß der Hubrahmen (4) seitlich gabelartig ausgebildet ist und seitlich in die Transportlücken unter die Strangteilstücke (1) vor dem Wiegen einfahrbar ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | DE-A-2 462 135 (MITSUI MINING & SMELTING CO. LTD) <br> * Seite 3, Zeile 19 - Seite 5, Zeile 23; Figuren 1-4 * <br> – – – | 1,6,4,5,8 | G 01 G 11/00 <br> G 01 G 19/14 |
| A | US-A-3 144 088 (L.G. KAPLAN) <br> * Spalte 2, Zeilen 45 - 49; Figur 1 * <br> – – – | 10 | |
| A | DE-C-967 518 (KARL SPIES) <br> * Seite 1, Zeilen 1 - 7 ** Zeilen 43 - 53; Figur 1 * <br> – – – – – | 1 | |
| | | | **RECHERCHIERTE SACHGEBIETE (Int. Cl.5)** <br><br> G 01 G <br> B 22 D |

Der vorliegende Recherchenbericht wurde für alle Patentansprüche erstellt

| Recherchenort | Abschlußdatum der Recherche | Prüfer |
|---|---|---|
| Den Haag | 11 Februar 91 | GANCI P.A. |